(19) Europäisches Patentamt / European Patent Office / Office européen des brevets

(11) **EP 4 459 243 B1**

(12) **EUROPÄISCHE PATENTSCHRIFT**

(45) Veröffentlichungstag und Bekanntmachung des Hinweises auf die Patenterteilung:
**24.12.2025  Patentblatt 2025/52**

(21) Anmeldenummer: **24173719.6**

(22) Anmeldetag: **02.05.2024**

(51) Internationale Patentklassifikation (IPC):
**G01G 11/00** *(2006.01)*     **B65G 15/14** *(2006.01)*
**G01G 19/03** *(2006.01)*

(52) Gemeinsame Patentklassifikation (CPC):
**G01G 19/03; G01G 11/003; B65G 15/14**

(54) **ANORDNUNG MIT FÖRDERVORRICHTUNG UND WAAGE**

ARRANGEMENT WITH CONVEYING DEVICE AND SCALE

DISPOSITIF AVEC CONVOYEUR ET BALANCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **03.05.2023  DE 102023111361**

(43) Veröffentlichungstag der Anmeldung:
**06.11.2024  Patentblatt 2024/45**

(73) Patentinhaber: WIPOTEC GmbH
**67657 Kaiserslautern (DE)**

(72) Erfinder:
• **Anders, Daniel**
  **67574 Osthofen (DE)**
• **Walter, Markus Jochen**
  **67705 Trippstadt (DE)**

(74) Vertreter: **Eder Schieschke & Partner mbB**
**Patentanwälte**
**Elisabethstraße 34**
**80796 München (DE)**

(56) Entgegenhaltungen:
**DE-U1- 202017 004 165**

**Beschreibung**

Die vorliegende Erfindung betrifft die gemeinsame Anordnung einer Fördervorrichtung und einer Waage.

Bei der industriellen Herstellung von Produkten ist es bekannt, solche Produkte durch eine Fertigungslinie zu fördern und dabei unterschiedlichen Bearbeitungsschritten zu unterziehen. So können Produkte beispielsweise mit bestimmten Kennzeichnungen versehen, auf Einhaltung bestimmter vorgegebener Werte überprüft, verschlossen, versiegelt, bedruckt, gescannt, durchstrahlt, inspiziert, verifiziert oder in sonstiger Weise bearbeitet werden, wobei im Weiteren hier vereinfachend und zusammenfassend der Begriff "Bearbeitung" verwendet werden soll. Im Anschluss an die Bearbeitung können die Produkte auch gewogen werden, um beispielsweise anhand des Gewichts weitere Bearbeitungsschritte durchzuführen. Dies kann beispielsweise die Einhaltung eines Mindestgewichts betreffen oder eine Vollständigkeitskontrolle sein. Theoretisch könnte über das Gewicht auch ermittelt werden, ob dem Produkt beispielsweise ein Beipackzettel beigelegt oder ein Siegel darauf aufgebracht wurde.

Bekannt ist dabei, die Produkte mit einer Fördervorrichtung zu fördern, bei der ein oberes Transportband und ein unteres Transportband in vertikaler Richtung übereinanderliegen und das Produkt zwischen sich klemmen, während es bearbeitet und gleichzeitig in Förderrichtung X gefördert wird. Ein stromabwärts zur Fördervorrichtung angeordnetes Wägeband einer Waage übernimmt die bearbeiteten Produkte, um sie weiterzufördern und währenddessen zu wiegen.

Dokument DE 20 2017 004165 U1 offenbart eine Vorrichtung zum Wiegen eines Produkts in einer Fertigungslinie.

Als nachteilig hat sich dabei herausgestellt, dass die Produkte in dem Moment, in dem sie insbesondere mit ihrem rückwärtigen Ende die Klemmung zwischen den beiden übereinander liegenden Bändern in Förderrichtung verlassen, dazu neigen, zu springen, zu verrutschen oder sich in sonstiger Weise unkontrolliert bzw. ungewünscht zu bewegen. Eine kontrollierte Übergabe an das Wägeband ist somit nicht möglich, ohne die Waage dabei mit störenden Impulsen zu beaufschlagen. Daher behilft man sich in der Praxis damit, zwischen Fördervorrichtung und Wägeband ein Übergabeband anzuordnen, auf dem das Produkt ungeklemmt von der Fördervorrichtung zum Wägeband transportiert und dann "beruhigt" auf das Wägeband übergeben werden kann. Dies wirkt sich jedoch nachteilig auf die erforderliche gesamte Baulänge der Anordnung "Fördervorrichtung + Wägeband" aus.

Aufgabe der Erfindung war es daher, die vorgenannten Nachteile zu überwinden. Die Erfindung beruht auf der Erkenntnis, eine besonders kurze Bauweise der vorgenannten Anordnung erzielen zu können durch Kombination mehrerer konstruktiver Merkmale der Anordnung. Zum einen wird das Wägeband dazu in Förderrichtung X unmittelbar anschließend an das untere Transportband positioniert, so dass die Gewichtskraft eines Produkts bei seiner Förderung vom unteren Transportband direkt an das Wägeband übergeben wird. Dadurch wird die Gesamtbaulänge von Waage und Fördervorrichtung in Förderrichtung X minimiert.

Zum anderen ist die Fördervorrichtung mit einem Freistellabschnitt ausgerüstet, der dafür sorgt, dass das Produkt bereits vor seiner Übergabe von der Fördervorrichtung auf das Wägeband vollständig ungeklemmt (freigestellt) ist, um Schläge auf das Wägeband zu vermeiden. Die Fördervorrichtung ist dabei folgendermaßen ausgebildet:

Das obere und das untere Transportband sind jeweils als Endlosband um einen jeweils zugehörigen oberen bzw. unteren Bandkörper herumgeführt, wobei wenigstens der obere Bandkörper dazu ein Bandstützelement aufweist. Während seines Umlaufs um den oberen Bandkörper gleitet das obere Transportband - zumindest auf der dem unteren Bandkörper zugewandten Unterseite des Bandstützelements - formschlüssig anliegend daran entlang. Die einander zugewandten Abschnitte des oberen und unteren Transportbands weisen zwischen sich in einer orthogonal zur Förderrichtung X verlaufenden Höhenrichtung Z einen Bandabstand $Z_B$ auf. Das Bandstützelement umfasst einen dem unteren Transportband zugewandten geraden Klemmabschnitt, der sich in Förderrichtung X erstreckt und in einem vorgebbaren Höhenabstand parallel zu einem geraden Klemmabschnitt der unteren Bandführung verläuft. Dadurch kann ein von und zwischen dem oberen und unteren Transportband geklemmtes Produkt in Förderrichtung X stabil und definiert gefördert werden.

Erfindungsgemäß weist das Bandstützelement darüber hinaus einen dem unteren Transportband zugewandten Freistellabschnitt auf, der sich - ausgehend von einer entlang der Förderrichtung X definierten Anschlussposition - in Förderrichtung X und mit einer Freistelllänge an den oberen Klemmabschnitt anschließt. Dieser Freistellabschnitt erstreckt sich wenigstens teilweise oberhalb des unteren Klemmabschnitts, wobei der Bandabstand entlang der Freistelllänge erfindungsgemäß so weit zunimmt, dass sich die Klemmung des Produkts bei dessen Förderung in Förderrichtung löst. Vorzugsweise bildet das dem Wägeband in Förderrichtung X zugewandte vordere Ende des Freistellabschnitts zugleich das vordere Ende des Bandstützelements. Weiterhin ist - wie vorstehend bereits erwähnt - eine Waage mit einem Vorlast bildenden, antreibbaren Wägeband vorgesehen, welches sich über eine vorgegebene Wägebandlänge in Förderrichtung X erstreckt, um von der Fördervorrichtung zugeführte Produkte vollständig freigestellt zu übernehmen, zu wiegen und weiterzufördern. Erfindungsgemäß ist weiterhin vorgesehen, dass die Länge des Wägebands nicht kürzer ist als die Freistelllänge.

Durch das Zusammenspiel dieser Merkmale ergibt sich der erfindungsgemäße Vorteil, in der Fördervorrichtung geklemmt bearbeitete Produkte in einer Platz sparenden Anordnung auf ein unmittelbar nachfolgendes Wägeband übergeben zu können, weil die Produkte zum Zeitpunkt der Übergabe an das Wägeband - anders als im Stand der Technik - bereits vollständig freigestellt sind. Durch die Abstimmung der Freistelllänge auf die Länge des Wägebands wird in erfinderischer Weise sichergestellt, dass all die Produkte sicher freigestellt werden, die von der Waage korrekt gewogen werden können. Übersteigt die Freistelllänge dagegen die Länge des Wägebands, so könnte ein Produkt, dessen Länge in etwa der Freistelllänge entspricht, nicht vollständig auf dem Wägeband aufliegen und daher nicht korrekt gewogen werden (Unter "Länge" ist in dieser Anmeldung stets die Länge in Förderrichtung X gemeint, sofern nichts Gegenteiliges erläutert ist).

Die Länge des Wägebands wird nach einer vorteilhaften Ausführungsform bestimmt nach der maximalen Länge eines zu wiegenden Produkts in Förderrichtung X. Bei der Festlegung einer sinnvollen Bandlänge kann berücksichtigt werden, dass nach der vollständigen Auflage des Produkts auf dem Wägeband eine gewisse Einschwingzeit $t_E$ vergeht, bis alle Einschwingvorgänge ausreichend weit abgeklungen sind, um einen aussagekräftigen Messwert ermitteln zu können. Da sich das Produkt während dieser Zeit mit einer vorgegebenen Bandgeschwindigkeit $V_B$ bewegt, kann zu einer nach Maßgabe der Produktlänge gewählten Bandlänge noch ein Einschwingzuschlag $L_E$ hinzugerechnet werden nach folgender Formel:

$$L_E = (V_B \cdot t_E) + L_C$$

mit

$V_B$ = vorgebbare Bandgeschwindigkeit des Wägebands

$t_e$ = vorgebbare Einschwingzeit

$L_C$ = empirisch oder anderweitig ermittelter oder vorgegebener, variabler oder konstanter Korrekturwert

Als Wägebandlänge kann dabei nach einer Variante a) der Achsen-Abstand zweier das Wägeband jeweils in die Gegenrichtung umlenkender Umlenkelemente, insbesondere Umlenkrollen, gelten.

Theoretisch könnte ein zu wiegendes Produkt jedoch vorne und/oder hinten über die Achsen der Umlenkelemente zumindest so weit hinausragen, wie sich die Umlenkelemente oder Rollen in Förderrichtung X erstrecken. Die Wägebandlänge entspräche in einer solchen Variante b) dann der Länge gemäß Variante a) zuzüglich der beiden Radii der jeweiligen Umlenkelemente (im Falle von zwei Rollen gleichen Durchmessers beträgt der Zuschlag genau einen Rollendurchmesser). Falls ein Vorlast bildendes Übergabeelement (beispielsweise in Form eines kurzen Blechstreifens o.Ä., siehe unten) stromaufwärts oder stromabwärts des eigentlichen Wägebands vorgesehen ist, kann dessen Ausdehnung in Förderrichtung X ebenfalls zur Wägebandlänge beitragen.

Nach einer vorteilhaften Ausführungsform der Erfindung ist vorgesehen, dass der Freistellabschnitt einen geraden Abschnitt umfasst, so dass der Bandabstand entlang der Freistelllänge linear zunimmt. Dadurch wird ein gleichmäßiger, harmonischer Übergang des Produkts aus dem geklemmten in den ungeklemmten Zustand gewährleistet, während sich das Produkt in Förderrichtung X bewegt. Je nach Bedarf kann der Freistellabschnitt auch ein anderes Profil aufweisen, entlang welchem das obere Transportband in vertikaler Richtung anliegend geführt wird, beispielsweise ein kurviger oder nichtkreisbogenförmiger Verlauf.

Nach einer weiteren vorteilhaften Ausführungsform der Erfindung ist vorgesehen, dass der Freistellabschnitt

a) einstückig oder starr verbunden mit dem oberen Klemmabschnitt ausgebildet ist (die Anzahl von Einzelteilen und der Montageaufwand werden dadurch verringert und zugleich die Stabilität des Bandstützelements bzw. des oberen Bandkörpers erhöht). und/oder

b) auf seiner dem unteren Klemmabschnitt zugewandten Seite über einen Radius an den oberen Klemmabschnitt anschließt (ein solcher Radius ist einfach zu fertigen und zur Umlenkung des oberen Transportbands vom Klemmabschnitt in den Freistellabschnitt besonders geeignet). und/oder

c) relativ zum oberen Klemmabschnitt beweglich, insbesondere verschwenkbar und einstellbar ist (dadurch lässt sich die Fördervorrichtung an verschiedene Freistellerfordernisse oder Produktgeometrien anpassen).

Vorzugsweise erstreckt sich das Bandstützelement über die gesamte Länge des oberen Bandkörpers und definiert dabei die Führung des oberen Transportbands in X-Z-Richtung bei dessen Umlauf. Das Bandstützelement entspricht dann in Wesentlichen oder vollständig dem oberen Bandkörper. Das Bandstützelement kann als eine umlaufende, vorzugsweise geschlossene, jedenfalls parallel zur Querrichtung Y verlaufende, also in der Regel waagerecht verlaufende, vorzugsweise einteilige Auflagefläche für das obere Transportband ausgebildet und geformt sein, an welcher das Transportband bei seinem Umlauf anliegend entlanggleitet. Lediglich am in Förderrichtung X gesehen vorderen und/oder hinteren Ende des oberen Bandkörpers kann eine Umlenk- oder Antriebsrolle vorgesehen sein, die anstelle des Bandstützelements die Umlenkung des Transportbands in die jeweilige Gegenrichtung übernimmt.

Der untere Klemmabschnitt erstreckt sich zu einem vordersten Ende in Förderrichtung X, wobei der in Förderrichtung X gemessene Abstand zwischen der Anschlussposition und dem vordersten Ende des unteren Klemmabschnitts mindestens 20 mm, vorzugsweise mindestens 50 mm, höchst vorzugsweise mehr als 80 mm beträgt, um die Klemmung eines entsprechend langen Produktes aufzuheben, bevor das geförderte Produkt das vorderste Ende des unteren Klemmabschnitts erreicht.

Auch die Freistelllänge selbst kann nach einer vorteilhaften Ausführungsform der Erfindung eine vorgegebene Länge aufweisen, die vorzugsweise mindestens 20 mm, vorzugsweise mindestens 50 mm, höchst vorzugsweise mehr als 80 mm beträgt.

Vorzugsweise ist die obere Bandführung relativ zur unteren Bandführung in Höhenrichtung Z verschieblich positionierbar und fixierbar, um unterschiedlich hohe Produkte geklemmt fördern zu können.

Nach einer weiteren vorteilhaften Ausführungsform der Erfindung ist wenigstens eine Bearbeitungsstation an der Fördervorrichtung angeordnet und dazu ausgebildet, ein zwischen dem oberen und unteren Klemmabschnitt vollständig geklemmtes Produkt zu bearbeiten. Vollständig geklemmt bedeutet in diesem Fall, dass das Produkt in Höhenrichtung Z und in einer Querrichtung Y, die zur Förderrichtung X und zur Höhenrichtung Z orthogonal verläuft, fixiert ist. Lediglich in Förderrichtung X kann das Produkt auch während der Bearbeitung bewegt werden, wozu das obere und untere Transportband gezielt angetrieben werden können. Als Bearbeitung kommt insbesondere infrage, das Produkt zu markieren (bedrucken, bekleben, besprühen etc.) und/oder ein Merkmal oder eine Kennzeichnung mit elektromagnetischen und/oder optischen Erkennungsmitteln zu erfassen und/oder zu verifizieren. Vorzugsweise erfolgt die Bearbeitung, während sich das Produkt in Förderrichtung X bewegt. Vorzugsweise bleibt das Produkt während seiner Förderung jedenfalls so lange vollständig zwischen dem oberen und dem unteren Transportband geklemmt, bis alle entlang der Fördervorrichtung vorgesehenen Bearbeitungsvorgänge abgeschlossen sind. Dies ist dann relevant, wenn ein nur schlecht oder gar nicht geklemmtes Produkt nicht korrekt bearbeitet werden kann. So lässt sich ein nicht definiert bewegtes Produkt schlecht bedrucken und weicht möglicherweise einer Andruckkraft eines Etikettiersystems aus. Auch das Druckbild eines auf dem Produkt anzubringenden Tintenstrahldrucks kann verzerrt und unleserlich aussehen, wenn das Produkt dabei nicht nur in Förderrichtung X, sondern auch quer dazu beweglich ist oder bewegt wird. Auch das Auslesen von Kennzeichnungen (RFID-Codierung, Barcode, QR-Code etc.) von dem Produkt kann erschwert werden, wenn dieses auch seitlich zur Förderrichtung X beweglich ist.

Erfindungsgemäß steht die Länge des Wägebands im Zusammenhang mit der Freistelllänge. Ergänzend kann die Freistelllänge auch in Abhängigkeit eines vorgegebenen Längenbereichs festgelegt werden, der die Länge des kürzesten, jedenfalls aber die Länge des längsten zu bearbeitenden bzw. zu fördernden und zu wiegenden Produkts abdeckt. So könnte die Bearbeitungs- und Fördervorrichtung für eine Gruppe von unterschiedlich langen Produkten ausgelegt oder eingestellt werden. Die maximale Produktlänge bestimmt hier die Mindestlänge des Freistellabschnitts. Denkbar ist ferner, die für die Freistellung wirksame Länge des Freistellabschnitts variabel bzw. einstellbar zu gestalten, um so auf unterschiedliche Produktlängen reagieren zu können. Beispielsweise könnte der Freistellabschnitt vollständig oder in Teilen entlang eines Langlochs oder einer sonstigen Verschiebekulisse verschieblich am oberen Bandkörper positionierbar und fixierbar sein.

Natürlich kann jedes der vorgenannten Bänder (Transportband, Wägeband) auch gebildet oder ersetzt werden durch mehrere einzelne Bänder, Riemen oder Gurte, solange die jeweilige Förder- oder Wiegefunktion erfüllt wird.

Nachfolgend wird eine Ausführungsform der Erfindung anhand von Figurenbeispielen näher erläutert. Dabei zeigt

Figur 1 eine perspektivische Ansicht einer erfindungsgemäßen Anordnung, und

Figur 2 eine Seitenansicht einer erfindungsgemäßen Anordnung.

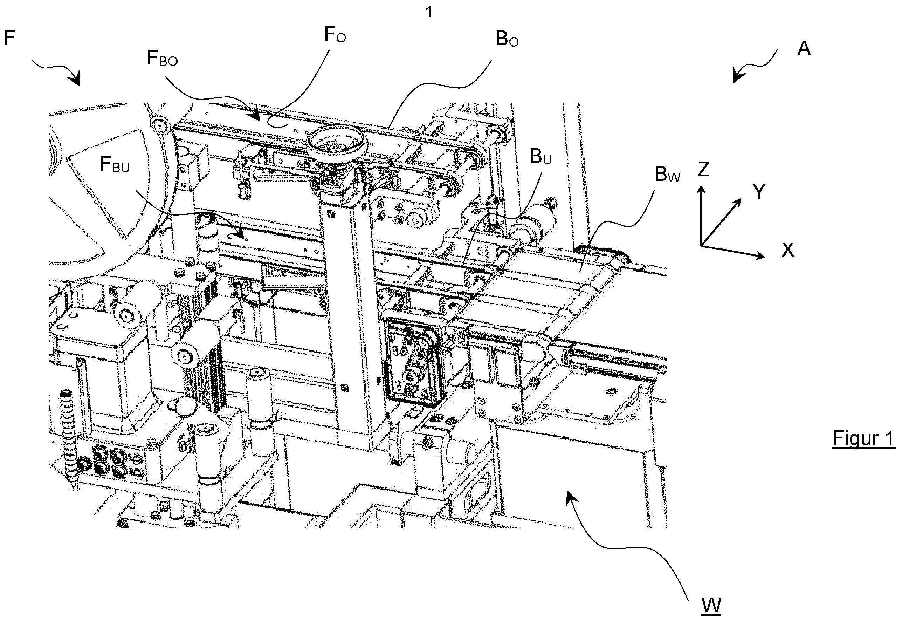

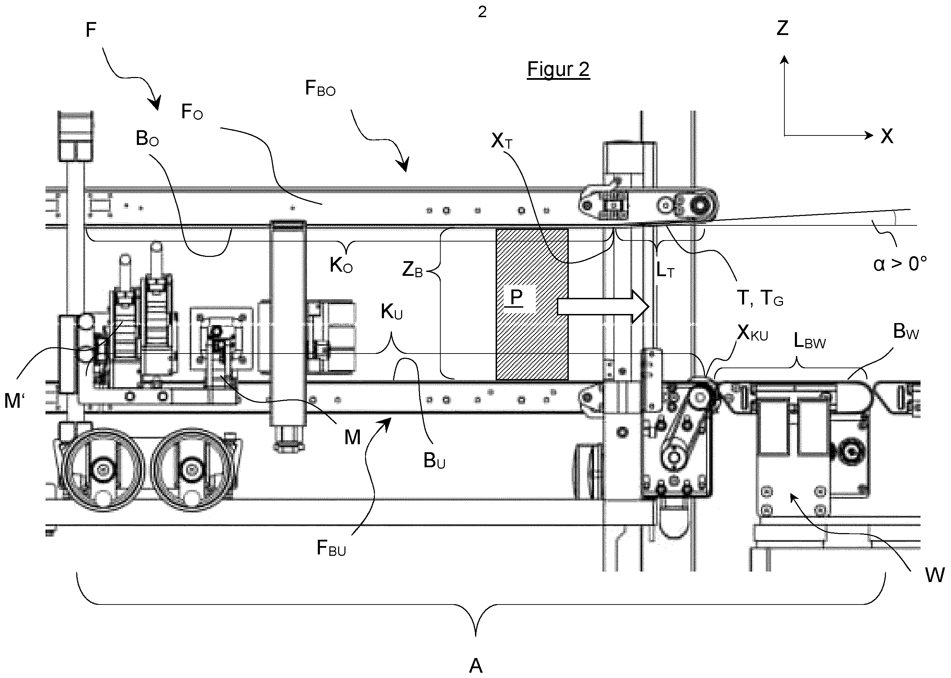

Die Figuren 1 und 2 zeigen einen Ausschnitt aus einer Fertigungslinie mit einer Anordnung A, welche eine Waage W und eine Fördervorrichtung F umfasst. Die Fördervorrichtung F ist dazu ausgebildet, Produkte P in einer Förderrichtung X zu fördern. Dabei werden die Produkte P an Bearbeitungsstationen M, M' entlangbewegt, um die Produkte P mithilfe der Bearbeitungsstationen zu bearbeiten (bedrucken, Kennzeichnungen scannen etc.).

Die Bearbeitung erfolgt, während die Produkte P geklemmt sind, um unerwünschte Relativbewegungen der Produkte während der Bearbeitung zu vermeiden. Die Fördervorrichtung F umfasst zu diesem Zweck ein unteres Transportband $B_U$, dem ein oberes Transportband $B_O$ in einer Höhenrichtung Z gegenüberliegt. Jedes Transportband wird von einem zugehörigen oberen bzw. unteren Bandkörper $F_{BO}$, $F_{BU}$ getragen, wobei jeder Bandkörper mit nicht gezeigten Antriebsmitteln für das jeweilige Transportband ausgestattet ist. Im dargestellten Beispiel nach Figur 1 sind jeweils zwei seitlich zueinander beabstandete Bandkörper bzw. Transportbänder dargestellt. Eine solche Anordnung ermöglicht den stabilen Transport der Produkte und gestattet für bestimmte Bearbeitungsvorgänge zugleich den Zugang auch zur Oberseite und Unterseite des Produkts zwischen den horizontal beanstandeten Bandkörper hindurch. Die beiden oberen bzw. unteren Bandkörper sind vergleichbar, so dass nachfolgend die Beschreibung auf je einen Bandkörper beschränkt werden kann.

Der obere Bandkörper $F_{BO}$ umfasst ein Bandstützelement $F_O$, an welchem das obere Transportband

$B_O$ während seines Umlaufs um den oberen Bandkörper $F_{BO}$ entlanggleitet und zugleich formschlüssig abgestützt wird. Das Bandstützelement $F_O$ weist einen geraden Klemmabschnitt $K_O$ auf, welcher dem unteren Transportband $B_U$ zugewandt ist. Der Klemmabschnitt $K_O$ erstreckt sich in einem vorgebbaren Höhenabstand parallel zu einem geraden unteren Klemmabschnitt $K_U$ des unteren Bandkörpers $F_{BU}$. Dadurch kann ein Produkt P von und zwischen dem oberen und unteren Klemmabschnitt bzw. dem jeweils davon gestützten Transportband $B_O$, $B_U$ geklemmt werden, während es von den angetriebenen Transportbändern in Förderrichtung (X) gefördert wird.

Wie insbesondere in Figur 2 zu sehen ist, schließt sich in Förderrichtung X an den oberen Klemmabschnitt $K_O$ ein Freistellabschnitt T an. Der Freistellabschnitt T schließt sich, ausgehend von einer Anschlussposition $X_T$, im Wesentlichen ebenfalls in Förderrichtung X an den oberen Klemmabschnitt $K_O$ an und hat dabei eine als Freistelllänge bezeichnete Länge $L_T$. Am vorderen freien Ende des oberen Bandkörpers ist eine nicht näher bezeichnete Umlenkrolle vorgesehen, die das entlang des Freistellabschnitts T geführte obere Transportband $B_O$ auf die Oberseite des Bandkörpers umlenkt bzw. zurückführt. Der Freistellabschnitt T des Bandstützelements $F_O$ erstreckt sich bis an diese Umlenkrolle heran. In vergleichbarer Weise ist am in Förderrichtung X gesehen vordersten Ende des unteren Bandkörpers $B_U$ eine solche Umlenkrolle vorgesehen. Der untere Klemmabschnitt $K_U$ erstreckt sich bis an diese Umlenkrolle heran.

Der Freistellabschnitt T ist im Wesentlichen als gerader Abschnitt $T_G$ ausgebildet, der sich unter einem flachen Winkel $\alpha$ leicht aufwärts erstreckt. Entlang der Freistelllänge $L_T$ wird daher ein in Förderrichtung X gefördertes, und zunächst zwischen den Transportbändern geklemmtes Produkt P allmählich freigestellt, bis auch sein rückwärtiges Ende den leicht ansteigenden Freistellabschnitt T erreicht. Da sich der Bandabstand $Z_B$ zwischen oberem und unterem Transportband entlang des Freistellabschnitts T vergrößert, nimmt die Klemmwirkung entsprechend ab, so dass das Produkt P vollständig freigestellt ist, wenn es mit seiner Vorderkante das vorderste wirksame Ende $X_{KU}$ des unteren Klemmabschnitts $K_U$ erreicht.

In Förderrichtung X schließt sich unmittelbar an das untere Transportband $B_U$ das Wägeband $B_W$ einer stromabwärts zur Fördervorrichtung angeordneten Waage W an. Die Anordnung des Wägebands $B_W$ ist so gewählt, dass ein vom unteren Transportband $B_U$ herangefördertes Produkt P seine Gewichtskraft vom unteren Transportband $B_U$ direkt an das Wägeband $B_W$ übergibt. Insbesondere wird auf die aus dem Stand der Technik bekannte Anordnung eines dazwischenliegenden zusätzlichen Förderbands oder einer anderen Stützfläche verzichtet. Die Waage mit ihrem Wägeband kann daher sehr eng an die Fördervorrichtung herangeführt werden, um insgesamt Baulänge in X-Richtung einzusparen.

Das Wägeband $B_W$ hat eine Wägebandlänge $L_{BW}$, die im dargestellten Fall der gesamten X-Erstreckung des Wägebands entspricht. Außerdem ist die Wägebandlänge $L_{BW}$ so gewählt, dass sie mindestens der Freistelllänge $L_T$ entspricht. Dadurch wird sichergestellt, dass die Waage W jedes Produkt ordnungsgemäß wiegen kann, welches ihr von der stromaufwärtigen Fördervorrichtung F in vollkommen freigestelltem Zustand übergeben wird.

Die erfindungsgemäße Anordnung des Wägebands "unmittelbar" hinter dem unteren Transportband ist so zu verstehen, dass keine in die Fördererebene ragenden Bauelemente zwischen Wägeband und unterem Transportband angeordnet sind, welche den Abstand zwischen Transportband und Wägeband unnötig vergrößern. Denkbar ist nach einer Ausführungsform der Erfindung jedoch die Anordnung eines kurzen Übergabeelements, insbesondere eines kurzen Stützblechs, welches dazu dient, den unvermeidbaren, beispielsweise zwickelförmigen Übergabespalt bzw. Rollenspalt zwischen einer vorderen Umlenkrolle des unteren Transportbands und der hinteren Umlenkrolle des unmittelbar daran anschließenden Wägebands abzudecken. Das Übergabeelement kann auf Höhe der Fördererebene liegen, die durch die Oberseite des unteren Transportbands bzw. des angrenzenden Wägebands definiert wird. In diesem Fall stützt das Übergabeelement das Produkt beim Übergang über den Spalt.

Das Übergabeelement kann am Wägeband angebracht sein und bildet damit Vorlast. Diese bevorzugte Ausführungsform ermöglicht es, ein Wägesignal bereits dann aufzunehmen, wenn das Produkt zwar das Übergabeelement, noch nicht jedoch das eigentliche Wägeband erreicht hat. Alternativ kann das Übergabeelement auch Teil der Fördervorrichtung sein. Dann bildet es keine Vorlast. Dies gilt auch für den dritten denkbaren Fall, bei dem das Übergabeelement von einem Maschinengestell getragen wird, welches weder der Waage noch der Fördervorrichtung zugeordnet ist. Ein vergleichbares Übergabeelement kann auch auf der stromabwärtigen Seite des Wägebands vorgesehen sein.

Bezugszeichen

| A | Anordnung |
|---|---|
| $B_O$ | Oberes Transportband |
| $B_U$ | Unteres Transportband |
| $B_W$ | Wägeband |
| F | Fördervorrichtung |
| $F_{BO}$ | Oberer Bandkörper |
| $F_{BU}$ | Unterer Bandkörper |
| $F_O$ | Bandstützelement |
| $K_O$ | Oberer Klemmabschnitt |
| $K_U$ | Unterer Klemmabschnitt |
| $L_{BW}$ | Länge des Wägebands in X-Richtung |
| $L_T$ | Freistelllänge, Länge des Freistellabschnitts in |

X-Richtung
$L_C$ Korrekturwert
$L_E$ Einschwingzuschlag
M, M' Bearbeitungsstation
P zu förderndes Produkt
$t_E$ Einschwingzeit
T Freistellabschnitt
$T_G$ gerader Abschnitt des Freistellabschnitts (T)
$V_B$ Bandgeschwindigkeit
W Waage
X Förderrichtung
$X_{KU}$ vorderstes Ende des unteren Klemmabschnitts $(K_U)$
$X_T$ Anschlussposition
Z Höhenrichtung
$Z_B$ Bandabstand

**Patentansprüche**

1.  Anordnung (A), umfassend eine Fördervorrichtung (F) und eine Waage (W),

    a) wobei die Fördervorrichtung (F) zum Transport von Produkten (P) in einer Förderrichtung (X) ausgebildet ist und umfasst:

    a1) wenigstens ein oberes Transportband $(B_O)$ und wenigstens ein in einer orthogonal zur Förderrichtung (X) verlaufenden Höhenrichtung (Z) darunter angeordnetes unteres Transportband $(B_U)$,
    a2) wobei das obere und das untere Transportband $(B_O, B_U)$ jeweils als Endlosband um einen jeweils zugehörigen oberen bzw. unteren Bandkörper $(F_{BO}, F_{BU})$ herumgeführt ist, und wobei wenigstens der obere Bandkörper $(F_{BO})$ dazu ein Bandstützelement $(F_O)$ aufweist, an welchem das obere Transportband formschlüssig anliegend entlanggleitet,
    a3) wobei die einander zugewandten Abschnitte des oberen und unteren Transportbands $(B_O, B_U)$ zwischen sich in Höhenrichtung (Z) einen Bandabstand $(Z_B)$ aufweisen,
    a4) und wobei das Bandstützelement $(F_O)$ einen dem unteren Transportband $(B_U)$ zugewandten geraden Klemmabschnitt $(K_O)$ aufweist, der sich in Förderrichtung (X) erstreckt und in einem vorgebbaren Höhenabstand parallel zu einem geraden Klemmabschnitt $(K_U)$ des unteren Bandkörpers $(F_{BU})$ verläuft, um ein von und zwischen dem oberen und unteren Transportband $(B_O, B_U)$ geklemmtes Produkt (P) in Förderrichtung (X) zu fördern,
    a5) und wobei das Bandstützelement $(F_O)$ einen dem unteren Transportband $(B_U)$ zugewandten Freistellabschnitt (T) aufweist, der sich, ausgehend von einer Anschlussposition $(X_T)$, entlang einer Freistelllänge $(L_T)$ in Förderrichtung (X) an den oberen Klemmabschnitt $(K_O)$ anschließt,
    a6) wobei sich der Freistellabschnitt (T) wenigstens teilweise oberhalb des unteren Klemmabschnitts $(K_U)$ erstreckt, und wobei der Bandabstand $(Z_B)$ entlang der Freistelllänge $(L_T)$ zunimmt, um die Klemmung des Produkts (P) bei dessen Förderung in Förderrichtung (X) zu lösen,

    b) wobei die Waage (W) ein Vorlast bildendes, antreibbares Wägeband $(B_W)$ aufweist, welches sich über eine Wägebandlänge $(L_{BW})$ in Förderrichtung (X) erstreckt, um von der Fördervorrichtung (F) zugeführte Produkte (P) vollständig freigestellt zu übernehmen, zu wiegen und weiterzufördern,

    **dadurch gekennzeichnet,**

    c1) dass das Wägeband $(B_W)$ in Förderrichtung (X) unmittelbar an das untere Transportband $(B_U)$ anschließt, so dass die Gewichtskraft eines Produkts (P) bei seiner Förderung vom unteren Transportband $(B_U)$ direkt an das Wägeband $(B_W)$ übergeben wird, um dadurch die Gesamtbaulänge von Waage (W) und Fördervorrichtung (F) in Förderrichtung (X) minimieren zu können,
    c2) wobei die Länge $(L_{BW})$ des Wägebands $(B_W)$ gleich lang oder länger ist als die Freistelllänge $(L_T)$.

2.  Anordnung (A) nach Anspruch 1, **dadurch gekennzeichnet, dass** der Freistellabschnitt (T) einen geraden Abschnitt $(T_G)$ umfasst, so dass der Bandabstand $(Z_B)$ entlang der Freistelllänge $(L_T)$ linear zunimmt.

3.  Anordnung (A) nach Anspruch 1 oder 2, **dadurch gekennzeichnet, dass** der Freistellabschnitt (T)

    a) einstückig oder starr verbunden mit dem oberen Klemmabschnitt $(K_O)$ ausgebildet ist, und/oder
    b) auf seiner dem unteren Klemmabschnitt $(K_U)$ zugewandten Seite über einen Radius an den oberen Klemmabschnitt $(K_O)$ anschließt, oder
    c) relativ zum oberen Klemmabschnitt $(K_O)$ beweglich, insbesondere verschwenkbar und einstellbar ist.

4.  Anordnung (A) nach einem der vorigen Ansprüche, **dadurch gekennzeichnet, dass** der untere Klemmabschnitt $(K_U)$ sich bis zu einem vordersten Ende (X_KU) in Förderrichtung (X) erstreckt, und dass der in Förderrichtung (X) gemessene Abstand zwischen Anschlussposition (X_T) und dem vordersten Ende (X_KU) mindestens 20 mm, vorzugsweise mindestens 50 mm, höchst vorzugsweise mehr als 80 mm beträgt, um die Klemmung eines entsprechend langen Produktes (P) spätestens dann aufzuheben, wenn das geförderte Produkt (P) das vorderste Ende (X_KU) erreicht.

5. Anordnung (A) nach einem der vorigen Ansprüche, **dadurch gekennzeichnet, dass** die Freistelllänge (L_T) mindestens 20 mm, vorzugsweise mindestens 50 mm, höchst vorzugsweise mehr als 80 mm beträgt.

6. Anordnung (A) nach einem der vorigen Ansprüche, **dadurch gekennzeichnet, dass** die obere Bandführung (F_BO) relativ zur unteren Bandführung (F_BU) in Höhenrichtung (Z) verschieblich positionierbar und fixierbar ist, um unterschiedlich hohe Produkte (P) geklemmt fördern zu können.

7. Anordnung (A) nach einem der vorigen Ansprüche, ferner umfassend wenigstens eine Bearbeitungsstation (M, M'), die dazu ausgebildet ist, ein zwischen dem oberen und unteren Klemmabschnitt (K_O, K_U) vollständig geklemmtes Produkt (P) zu bearbeiten, insbesondere zu markieren und/oder mit elektromagnetischen und/oder optischen Erkennungsmitteln zu erfassen und/oder zu inspizieren und/oder zu verifizieren, wobei die Bearbeitung vorzugsweise erfolgt, während sich das Produkt (P) in Förderrichtung (X) bewegt.

8. Anordnung nach einem der vorigen Ansprüche, **dadurch gekennzeichnet, dass** die Fördergeschwindigkeit des unteren Transportbands (B_U) und/oder des oberen Transportbands (B_O) so vorgebbar oder eingestellt ist, dass sie der Fördergeschwindigkeit des Wägebands (B_W) entspricht, um eine möglichst stoß- und ruckfreie Produktübergabe vom unteren Transportband zum Wägeband zu gewährleisten.

9. Anordnung nach einem der vorigen Ansprüche, **dadurch gekennzeichnet, dass** die Wägebandlänge (L_BW) bestimmt wird nach der maximalen Länge eines zu wiegenden Produkts (P) in Förderrichtung (X), vorzugsweise ergänzt um einen Einschwingzuschlag (L_E), der sich ergibt nach der Bedingung

$$L_E = (V_B \cdot t_E) + L_C$$

mit

$V_B$ = vorgebbare Bandgeschwindigkeit des Wägebands

$t_E$ = vorgebbare Einschwingzeit
$L_C$ = vorgebbarer Korrekturwert,

wobei als Wägebandlänge (L_BW) gilt

a) der Achsen-Abstand zweier das Wägeband (B_W) jeweils in die Gegenrichtung umlenkender, einen Radius aufweisender Umlenkelemente, insbesondere Umlenkrollen, oder
b) der Abstand gemäß a) zuzüglich der Radii der Umlenkelemente gemäß a).

10. Anordnung nach einem der vorigen Ansprüche, **dadurch gekennzeichnet, dass** die Freistelllänge (L_T) mindestens so groß gewählt wird wie eine vorgegebene, maximale Länge eines Produkts (P) in X-Richtung.

**Claims**

1. Arrangement (A) comprising a conveying device (F) and a scale (W),

a) wherein the conveying device (F) is designed to convey products (P) in a conveying direction (X) and comprises:

a1) at least one upper conveyor belt (B_O) and at least one lower conveyor belt (B_U) arranged below it in a height direction (Z) orthogonal to the conveying direction (X),
a2) wherein the upper and the lower conveyor belt (B_O, B_U) are each guided as an endless belt around a relevant associated upper or lower belt body (F_BO, F_BU), and wherein at least the upper belt body (F_BO) has a belt support element (F_O) on which the upper conveyor belt slides in a form-fitting manner,
a3) wherein the mutually facing portions of the upper and lower conveyor belt (B_O, B_U) have a belt gap (Z_B) between them in the height direction (Z),
a4) and wherein the belt support element (F_O) has a straight clamping portion (K_O) which faces the lower conveyor belt (B_U), extends in the conveying direction (X) and extends in parallel with a straight clamping portion (K_U) of the lower belt body (F_BU) at a predeterminable height gap in order to convey a product (P) clamped by and between the upper and lower conveyor belt (B_O, B_U) in the conveying direction (X),
a5) and wherein the belt support element (F_O) has a release portion (T) which faces the lower conveyor belt (B_U) and, starting from a connection position (X_T),

connects to the upper clamping portion ($K_O$) along a release length ($L_T$) in the conveying direction (X),

a6) wherein the release portion (T) extends at least partially above the lower clamping portion ($K_U$), and wherein the belt gap ($Z_B$) along the release length ($L_T$) increases in order to release the clamping of the product (P) when conveying it in the conveying direction (X),

b) wherein the scale (W) comprises a drivable weighing belt ($B_W$) which forms a preload and extends over a weighing belt length ($L_{BW}$) in the conveying direction (X) in order to completely release, weigh and further convey products (P) fed by the conveying device (F),

**characterized in that**

c1) the weighing belt ($B_W$) connects directly to the lower conveyor belt ($B_U$) in the conveying direction (X) so that the weight force of a product (P) is transferred directly to the weighing belt ($B_W$) when it is conveyed from the lower conveyor belt ($B_U$) in order to be able to minimize the overall length of the scale (W) and conveying device (F) in the conveying direction (X),

c2) wherein the length ($L_{BW}$) of the weighing belt ($B_W$) is equal to or longer than the release length ($L_T$).

2. Arrangement (A) according to claim 1, **characterized in that** the release portion (T) comprises a straight portion ($T_G$) so that the belt gap ($Z_B$) increases linearly along the release length ($L_T$).

3. Arrangement (A) according to claim 1 or 2, **characterized in that** the release portion (T)

a) is integrally or rigidly connected to the upper clamping portion ($K_O$), and/or

b) connects to the upper clamping portion ($K_O$) on its side facing the lower clamping portion ($K_U$) via a radius, or

c) is movable, in particular pivotable and adjustable, relative to the upper clamping portion ($K_O$).

4. Arrangement (A) according to any of the preceding claims, **characterized in that** the lower clamping portion ($K_U$) extends to a front end ($X_{KU}$) in the conveying direction (X), **and in that** the distance measured in the conveying direction (X) between the connection position ($X_T$) and the front end ($X_{KU}$) is at least 20 mm, preferably at least 50 mm, most preferably more than 80 mm, in order to release the clamping of a

corresponding long product (P) at the latest when the conveyed product (P) reaches the front end ($X_{KU}$).

5. Arrangement (A) according to any of the preceding claims, **characterized in that** the release length ($L_T$) is at least 20 mm, preferably at least 50 mm, most preferably more than 80 mm.

6. Arrangement (A) according to any of the preceding claims, **characterized in that** the upper belt guide ($F_{BO}$) can be movably positioned and fixed relative to the lower belt guide ($F_{BU}$) in the height direction (Z) in order to be able to convey products (P) of different heights in a clamped manner.

7. Arrangement (A) according to any of the preceding claims, further comprising at least one processing station (M, M') which is designed to process a product (P) which is completely clamped between the upper and lower clamping portion ($K_O$, $K_U$), in particular to mark it and/or to identify it and/or to inspect it and/or to verify it using electromagnetic and/or optical detection means, wherein processing preferably takes place while the product (P) is moving in the conveying direction (X).

8. Arrangement according to any of the preceding claims, **characterized in that** the conveying speed of the lower conveyor belt ($B_U$) and/or the upper conveyor belt ($B_O$) can be predetermined or adjusted so that it corresponds to the conveying speed of the weighing belt ($B_W$) in order to ensure that the product transfer from the lower conveyor belt to the weighing belt is as smooth and jerk-free as possible.

9. Arrangement according to any of the preceding claims, **characterized in that** the weighing belt length ($L_{BW}$) is determined according to the maximum length of a product to be weighed (P) in the conveying direction (X), preferably supplemented by a settling allowance ($L_E$), which results from the condition

$$L_E = (V_B \cdot t_E) + L_C$$

where $V_B$ = predeterminable belt speed of the weighing belt
$t_E$ = predeterminable settling time
$L_C$ = predeterminable correction value,
wherein the following applies as the weighing belt length ($L_{BW}$)

a) the axis gap between two deflecting elements, in particular deflecting rollers, which each deflect the weighing belt ($B_W$) in the opposite direction and have a radius, or
b) the gap according to a) plus the radii of the deflecting elements according to a).

10. Arrangement according to any of the preceding claims,
**characterized in that** the release length ($L_T$) is chosen to be at least as large as a predetermined maximum length of a product (P) in the X direction.


## Revendications

1. Agencement (A) comprenant un dispositif de transport (F) et une balance (W),

   a) dans lequel le dispositif de transport (F) est conçu pour le transport de produits (P) dans une direction de transport (X) et comprend :

      a1) au moins une bande transporteuse supérieure ($B_O$) et au moins une bande transporteuse inférieure ($B_U$) disposée en dessous dans une direction verticale (Z) s'étendant orthogonalement à la direction de transport (X),
      a2) dans lequel la bande transporteuse supérieure et la bande transporteuse inférieure ($B_O$, $B_U$) sont respectivement guidées sous forme de bandes sans fin autour d'un corps de bande supérieur ou inférieur ($F_{BO}$, $F_{BU}$) respectivement associé, et dans lequel au moins le corps de bande supérieur ($F_{BO}$) présente à cet effet un élément de support de bande ($F_O$) le long duquel la bande transporteuse supérieure glisse en s'appuyant par complémentarité de forme,
      a3) dans lequel les sections tournées l'une vers l'autre des bandes transporteuses supérieure et inférieure ($B_O$, $B_U$) présentent entre elles, dans la direction verticale (Z), un écartement de bande ($Z_B$),
      a4) et dans lequel l'élément de support de bande ($F_O$) présente une section de serrage droite ($K_O$) tournée vers la bande transporteuse inférieure ($B_U$), laquelle section de serrage droite s'étend dans la direction de transport (X) et s'étend à une distance verticale pouvant être prédéfinie parallèlement à une section de serrage droite ($K_U$) du corps de bande inférieur ($F_{BU}$) afin de transporter, dans la direction de transport (X), un produit (P) serré par et entre les bandes transporteuses supérieure et inférieure ($B_O$, $B_U$),
      a5) et dans lequel l'élément de support de bande ($F_O$) présente une section de dégagement (T) tournée vers la bande transporteuse inférieure ($B_U$), laquelle section de dégagement, partant d'une position de raccordement ($X_T$), se raccorde à la section de serrage supérieure ($K_O$) le long d'une longueur de dégagement ($L_T$) dans la direction de transport (X),
      a6) dans lequel la section de dégagement (T) s'étend au moins partiellement au-dessus de la section de serrage inférieure ($K_U$), et dans lequel l'écartement de bande ($Z_B$) augmente le long de la longueur de dégagement ($L_T$) pour relâcher le serrage du produit (P) lors de son transport dans la direction de transport (X),

   b) dans lequel la balance (W) présente une bande de pesée ($B_W$) pouvant être entraînée et formant une précharge, laquelle bande de pesée s'étend sur une longueur de bande de pesée ($L_{BW}$) dans la direction de transport (X), afin de prendre en charge, de peser et de continuer à transporter des produits (P) amenés par le dispositif de transport (F) en étant complètement dégagée,

   **caractérisé en ce**

      c1) **que** la bande de pesée ($B_W$) se raccorde directement à la bande transporteuse inférieure ($B_U$) dans la direction de transport (X), en sorte que le poids d'un produit (P) est transmis directement à la bande de pesée ($B_W$) lors de son transport depuis la bande transporteuse inférieure ($B_U$), afin de pouvoir ainsi réduire à un minimum la longueur totale de la balance (W) et du dispositif de transport (F) dans la direction de transport (X),
      c2) dans lequel la longueur ($L_{BW}$) de la bande de pesée ($B_W$) est égale ou supérieure à la longueur de dégagement ($L_T$).

2. Agencement (A) selon la revendication 1, **caractérisé en ce que** la section de dégagement (T) comprend une section droite ($T_G$), en sorte que l'écartement de bande ($Z_B$) augmente linéairement le long de la longueur de dégagement ($L_T$).

3. Agencement (A) selon la revendication 1 ou 2, **caractérisé en ce que** la section de dégagement (T)

      a) est réalisée d'une seule pièce ou est reliée de manière rigide à la section de serrage supérieure ($K_O$), et/ou
      b) se raccorde, sur son côté tourné vers la section de serrage inférieure ($K_U$), à la section de serrage supérieure ($K_O$) par l'intermédiaire d'un rayon, ou

c) est mobile, en particulier pivotante et réglable, par rapport à la section de serrage supérieure ($K_O$).

4. Agencement (A) selon l'une des revendications précédentes, **caractérisé en ce que** la section de serrage inférieure ($K_U$) s'étend jusqu'à une extrémité la plus à l'avant ($X_{KU}$) dans la direction de transport (X), **et en ce que** la distance mesurée dans la direction de transport (X) entre la position de raccordement ($X_T$) et l'extrémité la plus à l'avant ($X_{KU}$) est d'au moins 20 mm, de préférence d'au moins 50 mm, le plus préférablement de plus de 80 mm, afin de supprimer le serrage d'un produit (P) de longueur correspondante au plus tard lorsque le produit (P) transporté atteint l'extrémité la plus à l'avant ($X_{KU}$).

5. Agencement (A) selon l'une des revendications précédentes, **caractérisé en ce que** la longueur de dégagement ($L_T$) est d'au moins 20 mm, de préférence d'au moins 50 mm, le plus préférablement de plus de 80 mm.

6. Agencement (A) selon l'une des revendications précédentes, **caractérisé en ce que** le guide-bande supérieur ($F_{BO}$) peut être positionné de manière coulissante par rapport au guide-bande inférieur ($F_{BU}$) dans la direction verticale (Z) et peut être fixé afin de pouvoir transporter des produits (P) de différentes hauteurs en les serrant.

7. Agencement (A) selon l'une des revendications précédentes, comprenant en outre au moins un poste de traitement (M, M') qui est conçu pour traiter un produit (P) complètement serré entre la section de serrage supérieure et la section de serrage inférieure ($K_O$, $K_U$), en particulier pour le marquer et/ou le détecter par des moyens de détection électromagnétiques et/ou optiques et/ou pour l'inspecter et/ou le vérifier, dans lequel le traitement est de préférence effectué pendant que le produit (P) se déplace dans la direction de transport (X).

8. Agencement selon l'une des revendications précédentes, **caractérisé en ce que** la vitesse de transport de la bande transporteuse inférieure ($B_U$) et/ou de la bande transporteuse supérieure ($B_O$) peut être prédéfinie ou est réglée de manière à correspondre à la vitesse de transport de la bande de pesée ($B_W$), afin de garantir un transfert de produit de la bande transporteuse inférieure à la bande de pesée avec le moins de chocs et d'à-coups possible.

9. Agencement selon l'une des revendications précédentes, **caractérisé en ce que** la longueur de bande de pesée ($L_{BW}$) est déterminée d'après la longueur maximale d'un produit (P) à peser dans la direction de transport (X), de préférence complétée par un supplément de stabilisation ($L_E$) qui résulte de la condition

$$L_E = (V_B \cdot t_E) + L_C$$

avec $V_B$ = vitesse de bande prédéfinissable de la bande de pesée
$t_E$ = temps de stabilisation prédéfinissable
$L_C$ = valeur de correction prédéfinissable,
dans lequel est considérée comme longueur de bande de pesée ($L_{BW}$) ce qui suit

a) la distance inter-axes de deux éléments de renvoi présentant un rayon et renvoyant la bande de pesée ($B_W$) respectivement dans la direction opposée, en particulier des rouleaux de renvoi, ou
b) la distance conformément à a) plus les rayons des éléments de renvoi conformément à a).

10. Agencement selon l'une des revendications précédentes, **caractérisé en ce que** la longueur de dégagement ($L_T$) est choisie au moins aussi grande qu'une longueur maximale prédéfinie d'un produit (P) dans la direction X.

F  F_BO  F_O  B_O  A

F_BU

B_U  B_W

Z
Y
X

1

Figur 1

EP 4 459 243 B1

Figur 2

EP 4 459 243 B1

**EP 4 459 243 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017004165 U1